# EUROPEAN PATENT APPLICATION

(11) **EP 4 765 965 A1**
(43) Date of publication of application: **24.06.2026**
(21) Application number: 23948873.7
(22) Date of filing: 17.08.2023
(51) Int. Cl.: H04W 56/00

(54) **WIRELESS COMMUNICATION METHOD, TERMINAL DEVICE, AND NETWORK DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/113496
(87) International publication number: WO 2025/035445

(57) **Abstract**

The present disclosure provides a method for wireless communication, a terminal device, and a network device. The method includes: receiving, by a terminal device, a first parameter sent by a network device, where the first parameter is configured to configure a first time alignment timer, and the terminal device has an ability of actively adjusting a timing advance. In the embodiments of the present disclosure, by configuring a timer (such as the first time alignment timer) for the terminal device, synchronization calibration can be performed between the terminal device and the network device, which is conducive to the synchronous adjustment of TA between the terminal device and the network device.

## Description

### TECHNICAL FIELD

The present disclosure relates to the field of communication technology, and in particular to a method for wireless communication, a terminal device, and a network device.

### BACKGROUND

Adjustment of timing advance (TA) according to application scenarios of terminal devices is usually needed to achieve uplink synchronization in various scenarios. For example, a terminal device typically adjusts TA based on TA commands sent by a network device. For example, in a case where the terminal device cannot acquire TA adjustment parameters, the terminal device may adjust the TA by itself. In this case, how to synchronously adjust TA and related parameters at both the network device and the terminal device is an urgent problem to be solved.

### SUMMARY

The present disclosure provides a method for wireless communication, a terminal device, and a network device. Aspects of the present disclosure will be illustrated below.

In a first aspect, a method for wireless communication is provided, including: receiving, by a terminal device, a first parameter sent by a network device, where the first parameter is configured to configure a first time alignment timer, and the terminal device has an ability of actively adjusting a TA.

In a second aspect, a method for wireless communication is provided, including: sending, by a network device, a first parameter to a terminal device, where the first parameter is configured to configure a first time alignment timer, and the terminal device has an ability of actively adjusting a TA.

In a third aspect, a terminal device is provided, including: a memory, a processor, and communication interface. The memory is configured to store at least one computer program, and the processor is configured to call the at least one computer program in the memory, causing the terminal device to perform some or all of the operations of the method according to the first aspect.

In a fourth aspect, a network device is provided, including: a memory, a processor, and communication interface. The memory is configured to store at least one computer program, and the processor is configured to call the at least one computer program in the memory, causing the network device to perform some or all of the operations of the method according to the second aspect.

In a fifth aspect, embodiments of the present disclosure provide a communication system including the terminal device(s) and/or the network device(s) as illustrated above. In some other embodiments, the system may further include other devices in the solutions provided in the embodiments of the present disclosure that interact with the terminal device or the network device.

In a sixth aspect, embodiments of the present disclosure provide a computer-readable storage medium, configured to store computer programs, which cause a computer to perform some or all of the operations of the method according to the aspects illustrated above.

In a seventh aspect, embodiments of the present disclosure provide a computer program product, including non-transitory computer-readable storage medium configured to store computer programs, the computer programs are operable to cause a computer to perform some or all of the operations of the method according to the aspects illustrated above. In some embodiments, the computer program product may be a software installation package.

In an eighth aspect, embodiments of the present disclosure provide a computer program that is operable to causes a computer to perform some or all of the operations of the method according to the aspects illustrated above.

In a ninth aspect, embodiments of the present disclosure provide a chip including a memory and a processor, where the processor is configured to call computer programs from the memory and run the computer programs, to perform some or all of the operations of the method according to the aspects illustrated above.

In the embodiments of the present disclosure, by configuring a timer (such as the first time alignment timer) for the terminal device, synchronization calibration can be performed between the terminal device and the network device, which is conducive to the synchronous adjustment of TA between the terminal device and the network device.

### BRIEF DESCRIPTION OF THE DRAWINGS

FIG. 1 is a schematic diagram of an architecture of a wireless communication system to which the embodiments of the present disclosure are applicable.
FIG. 2A is a schematic diagram of uplink transmission delay in the absence of TA mechanism.
FIG. 2B is a schematic diagram of uplink transmission delay in the presence of TA mechanism.
FIG. 3 is a schematic flowchart of the method for wireless communication provided in some embodiments of the present disclosure.
FIG. 4 is a schematic diagram showing synchronous adjustment of TA.
FIG. 5 is a schematic diagram of the structure of the terminal device provided in some embodiments of the present disclosure.
FIG. 6 is a schematic diagram of the structure of the network device provided in some embodiments of the present disclosure.
FIG. 7 is a schematic diagram of the structure of the communication apparatus provided in some embodiments of the present disclosure.

### DETAILED DESCRIPTION OF THE EMBODIMENTS

The following will illustrate, in conjunction with the accompanying drawings, the technical solutions of the present disclosure.

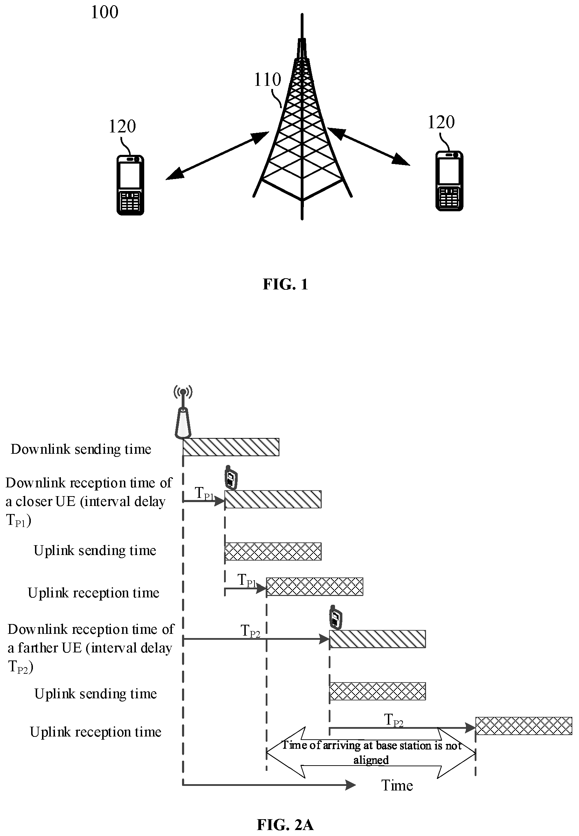

FIG. 1 is a schematic diagram of an architecture of a wireless communication system 100 to which the embodiments of the present disclosure are applicable. The wireless communication system 100 may include network devices 110 and terminal devices 120. The network devices 110 may be devices that communicate with the terminal devices 120. The network devices 110 can provide communication coverage for a specific geographic area and can communicate with the terminal devices 120 located in the coverage area.

FIG. 1 exemplarily shows a network device and two terminal devices. In some embodiments, the wireless communication system 100 may include a plurality of network devices, and there may be other numbers of terminal devices located in a respective coverage area of each network device, which will not be specified in the embodiments of the present disclosure.

In some embodiments, the wireless communication system 100 may further include other network entities such as a network controller, a mobility management entity, and the like, which will not be specified in the embodiments of the present disclosure.

It should be understood that the technical solutions of the embodiments of the present disclosure may be applied to various communication systems, such as 5th generation (5G) systems or new radio (NR), long term evolution (LTE) systems, LTE frequency division duplex (FDD) systems, LTE time division duplex (TDD), and the like. The technical solutions provided in the present disclosure may also be applied to future communication systems, such as the sixth generation mobile communication system, satellite communication system, and the like.

The terminal device in the embodiments of the present disclosure may be referred to as user equipment (UE), an access terminal, a user unit, a user station, a mobile station (MS), a mobile terminal (MT), a remote station, a remote terminal, a mobile device, a user terminal, a terminal, a wireless communication device, a user proxy or a user device. The terminal device in the embodiments of the present disclosure may refer to a device that provides voice and/or data connectivity to a user, and can be used to communicate people, an object and a computer, such as a handheld device or a vehicle-mounted device with wireless connection function. The terminal device in the embodiments of the present disclosure may be a mobile phone, a tablet computer (Pad), a notebook computer, a palm computer, a mobile internet device (MID), a wearable device, a virtual reality (VR) device, an augmented reality (AR) device, a wireless terminal in industrial control, a wireless terminal in self-driving, a wireless terminals in a remote medical surgery, a wireless terminals in smart grid, a wireless terminal in transportation safety, a wireless terminal in a smart city, a wireless terminal in a smart home, or the like. In some embodiments, the UE may function as a base station. For example, the UE may function as a scheduling entity that provides a lateral link signal between UEs in V2X or D2D, etc. For example, a cellular phone and a car communicate with each other using lateral link signals. The cellular phone communicates with smart home devices, without relaying communication signals by a base station.

The network device in the embodiments of the present disclosure is a device configured to communicate with a terminal device, which may also be referred to as an access network device or a wireless access network device, for example, the network device may be a base station. The network device in the embodiments of the present disclosure may refer to a radio access network (RAN) node (or device) that provides access to a wireless network for a terminal device. The base station may broadly cover the following names, or be a substitute for the following names, such as Node B, evolved NodeB (eNB), next generation NodeB (gNB), a relay station, an access point, a transmitting and receiving point (TRP), a transmitting point (TP), a master eNodeB (MeNB), a secondary eNodeB (SeNB), a multi-standard radio (MSR) node, a home base station, a network controller, an access node, a wireless node, an access piont (AP), a transmitting node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or a combination thereof. A base station may also be a communication module, a modem or a chip arranged in the aforementioned equipment or devices. The base station may also be a mobile switching center, a device that serves as a base station in device-to-device (D2D) communication, vehicle-to-everything (V2X) communication, machine-to-machine (M2M) communication, a network-side device in 6G network, and a device that serves as a base station in future communication systems. The base station can support networks using the same or different access technologies. The specific technology and equipment form adopted by the network device are not limited in the embodiments of the present disclosure.

The base station may be fixed or mobile. For example, a helicopter or a drone may be configured as a mobile base station, and one or more cells may move with the location of the mobile base station. In other examples, a helicopter or a drone may be configured as a device for communicating with another base station.

In some deployment, the network device in the embodiments of the present disclosure may refer to CU or DU, or the network device may include both CU and DU. gNB may also include AAU.

The network devices and the terminal devices may be deployed on land, including indoor or outdoor, handheld or vehicle boarded, or may be deployed on the water, or may further be deployed on airplanes, balloons and satellites in the air. The scenes where the network devices and the terminal devices are located is not limited in the embodiments of the present disclosure.

It should be understood that all or part of the functions of the communication devices in the present disclosure may also be implemented by the functions of software running on hardware, or by the virtualization functions instantiated on platforms (such as cloud platforms).

### TA

Wireless communication systems (such as LTE/NR systems) may adopt transmission schemes of orthogonal frequency division multiplexing (OFDM). This is because only when each subcarrier maintains orthogonality, can wireless communication systems have good demodulation performance. However, due to the existence of transmission delay, reception of a downlink signal by the terminal device has to undergo a certain delay. Due to the different positions of terminal devices relative to network devices, the arrival moments of uplink signals sent by the terminal devices to network devices are different from each other, which will seriously affect the orthogonality between subcarriers and reduce the demodulation performance of OFDM transmission schemes.

Taking uplink transmission as an example, an important feature of uplink transmission is that terminal devices perform orthogonal multiple access in time domain and frequency domain, that is, uplink transmissions from different terminal devices in the same cell do not interfere with each other. Generally, a plurality of terminal devices perform uplink transmission concurrently, such that a network device may concurrently receive signals from a plurality of terminal devices.

In order to ensure the orthogonality of uplink transmission and prevent intra-cell interference, the network device requires that arrival moments to the network device of signals sent by terminal devices at the same time using different frequency domain resources are basically aligned, because as long as the network device receives the uplink data sent by the terminal device within the ranges of cyclic prefix, the uplink data can be correctly decoded. In addition, in order to maintain the orthogonality between uplink reference signals using different cyclic shifts, the network device also requires that the received uplink reference signals must be aligned in time. Therefore, in order to achieve uplink synchronization, in other words, to ensure time synchronization on the network device side, wireless communication systems (such as LTE/NR systems) can support the mechanism of uplink TA.

TA may be regarded as a command sent by the network device to the terminal device to adjust uplink transmission of the terminal device. The embodiments of the present disclosure do not limit the uplink transmission of the terminal device. For example, the uplink transmission may include one or more of: a physical uplink shared channel (PUSCH), a physical uplink control channel (PUCCH), a sounding reference signal (SRS), or the like.

In communication systems that support uplink TA, the uplink clock and downlink clock on the network device side are the same, while there is an offset between the uplink clock and downlink clock on the terminal device side, and terminal devices have uplink TAs different from each other. On the terminal device side, the TA is essentially the offset between the starting time at which the terminal device receives a downlink frame and the time at which an uplink frame is transmitted. By appropriately controlling the offset of each terminal device, the network device can control the arrival moments to the network device of uplink signals sent by terminal devices to be basically aligned. For terminal devices that are relatively far away from the network device, due to relatively great transmission delay, these terminal devices need to send uplink data earlier than the terminal devices that are relatively close to the network device.

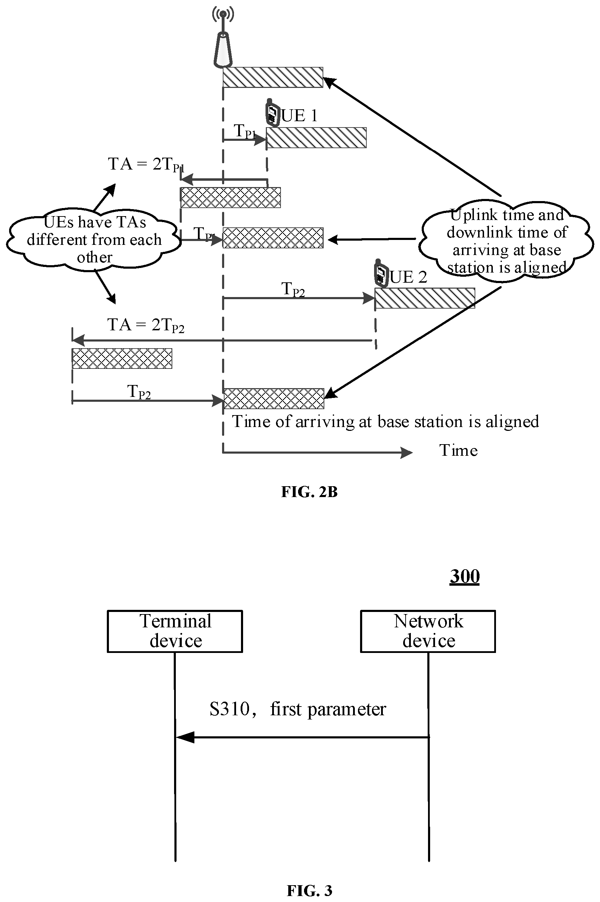

FIG. 2A shows the delay of an uplink signal arriving at the network device in the absence of TA, and FIG. 2B shows the delay of an uplink signal arriving at the network device in the presence of TA mechanism. As shown in FIG. 2A, in the absence of TA, the uplink signals sent by terminal devices (such as those with different distances from the network device) have arrival moments to the network device different from each other, which may lead to intra-cell interference. By introducing TA, as shown in FIG. 2B, terminal devices are configured with uplink TAs different from each other, so that the uplink signals sent by the terminal devices arrive at the network device at the same time, which is conducive to preventing intra-cell interference. Taking the terminal devices shown in FIG. 2B respectively denoted as terminal device 1 and terminal device 2 as an example, when terminal device 1 and terminal device 2 receive downlink signals and send uplink signals synchronously, the uplink signals sent by terminal device 1 and terminal device 2 will have offsets of 2Tₚ₁ and 2Tₚ₂ relative to the network device, respectively, ensuring that the uplink signals from terminal device 1 and terminal device 2 reach the network device simultaneously. In other words, when terminal device 1 and terminal device 2 receive downlink signals and send uplink signals synchronously, the TA values corresponding to terminal device 1 and terminal device 2 are 2Tₚ₁ and 2Tₚ₂, respectively, thereby ensuring that the uplink signals from terminal device 1 and terminal device 2 reach the network device simultaneously.

The network device may determine the TA value of each terminal device by measuring the uplink transmission of each terminal device. The network device may send TA commands to terminal devices to notify the terminal devices of their TA values, respectively. For example, the network device may send TA commands to terminal devices using the following two methods.

Method 1, acquisition of initial TAs: the terminal devices may achieve initial uplink synchronization using random access procedures. During the random access procedures, the network device may determine the TA values by measuring the received preamble and send them to the terminal devices using the field of timing advance command (TAC) of the random access response (RAR) message. For example, the network device may configure a 12-bit TAC in the RAR message to indicate the initial TAs to terminal devices.

Method 2, adjustment of TA under RRC_CONNECTED state: although uplink synchronization between the terminal device and the network device is achieved during the random access procedure, the timing of arrival of the uplink signals at the network device may vary with time, for example in unstable environments such as multipath propagation and clock drift, uplink synchronization may vary. Therefore, the terminal device needs to continuously update the value of uplink TA to maintain uplink synchronization. When the TA of a terminal device needs to be calibrated, the network device may send a TA command to the terminal device, indicating the terminal device to adjust the uplink timing. In some embodiments, the TA command is sent by the network device to the terminal device using media access control control element (MAC CE), and the MAC CE may also be referred to as TA command MAC CE (i.e., the MAC CE carrying the TA command). That is to say, when the terminal device is in RRC_CONNECTED state, the terminal device may adjust the uplink transmission according to the MAC CE carrying TA commands.

With the change in the usage scenarios of terminal devices, adjustment of TA is usually needed to achieve uplink synchronization in different scenarios. For example, terminal devices typically adjust TA based on TA commands sent by network devices. For example, in the case where the terminal device cannot acquire TA adjustment parameters, the terminal device may actively adjust TA, such as adjusting TA and corresponding parameters based on detected signals. In this case, how to maintain synchronization of adjustment of TA and related parameters between network devices and terminal devices, for example how network devices can get to know whether terminal devices have adjusted TA and related parameters, and how to ensure that network devices and terminal devices adjust the time alignment timers at the agreed time point, are urgent problems to be solved.

Directing at the above problems, the embodiments of the present disclosure provide synchronous calibration between terminal devices and network devices using transmission of the relevant information of the first time alignment timer between the terminal devices and the network devices, which is conducive to the maintenance of synchronization of adjustment of TA between network devices and terminal devices.

In the following, the method embodiments of the present disclosure will be illustrated in conjunction with the accompanying drawings.

FIG. 3 is a schematic flowchart of the method for wireless communication provided in some embodiments of the present disclosure. The method according to FIG. 3 is illustrated from the perspective of interaction between the terminal device and the network device, such as the terminal device 120 and the network device 110 shown in FIG. 1. The method 300 shown in FIG. 3 may include operation S310, which will be illustrated below.

At S310, the terminal device receives a first parameter sent by the network device, in other words, the network device sends the first parameter to the terminal device. The first parameter is configured to configure a first time alignment timer (TAT), and the terminal device has an ability of actively adjusting a TA (may also be referred to as active adjustment ability of TA).

In some embodiments, the first parameter may be a parameter of the first time alignment timer, or be a parameter associated with the first time alignment timer. In other words, the terminal device may configure and/or maintain the first time alignment timer based on the first parameter. For example, the first parameter may include one or more parameters of the first time alignment timer, such as the start condition, initial value, timeout handling, start time, or the like. For example, the first parameter may include one or more of the number, identifier, or index of the first time alignment timer.

In some embodiments, the configuration of the first time alignment timer may be performed by the terminal device. That is to say, each terminal device may be configured with a respective first time alignment timer, which is conducive to providing a time reference for TA adjustment for different terminal devices.

In the carrier aggregation (CA) scenario, due to a plurality of aggregated carriers being in different frequency bands, the terminal device may need to use different TAs for the uplink carriers. Therefore, the standard introduces a timing advance group (TAG). Each TAG may include one or more cells, and the cells included in each TAG may use a same TA. Therefore, the configuration granularity of the first time alignment timer may be TAG, which is conducive to providing a time reference for TA adjustment for different TAGs.

In some embodiments, the network device may configure or maintain a second time alignment timer, for example each terminal device is configured with a respective second time alignment timer. The second time alignment timer is a time alignment timer maintained by the network device and associated with the first time alignment timer. The combination of the first time alignment timer and the second time alignment timer is conducive to the maintenance of synchronization of adjustment of TA between the network device and the terminal device.

In some embodiments, the starting time of the first time alignment timer and the starting time of the second time alignment timer may be associated with the sending time of the information associated with TA adjustment and/or the receiving time of the information associated with TA adjustment. The association relationships may be pre-configured or executed according to the provision of protocols.

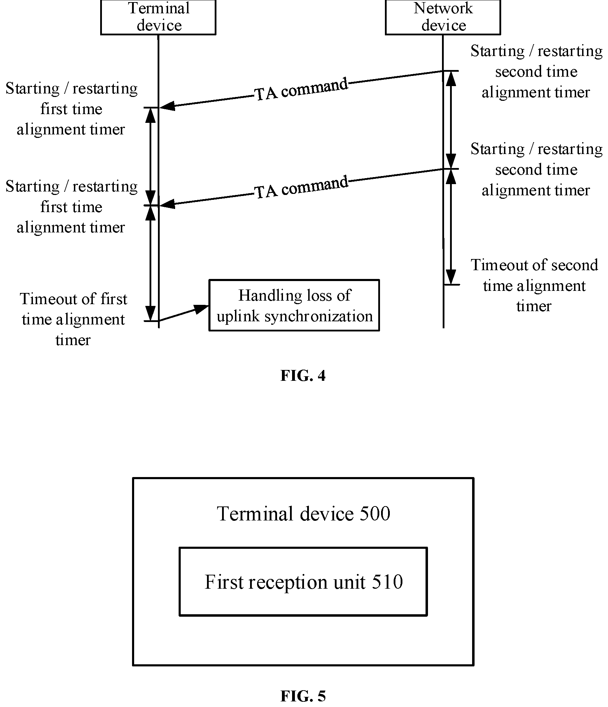

In the following, a method for maintaining synchronization of adjustment of TA between the network device and the terminal device based on the first time alignment timer and the second time alignment timer will be illustrated briefly in conjunction with FIG. 4. In the method shown in FIG. 4, the terminal device and the network device maintain the first time alignment timer and the second time alignment timer, respectively.

Referring to FIG. 4, after receiving the TA command, the terminal device may start or restart the first time alignment timer. The network device may start or restart the second time alignment timer after sending the TA command.

In response to timeout of the first time alignment timer and the terminal device not receiving the TA command sent by the network device, it is considered that the terminal device loses uplink synchronization. In this case, the terminal device may handle the loss of uplink synchronization, such as sending a preamble to acquire a new TA value or updating the TA.

In the embodiments of the present disclosure, TA may also be understood or replaced with TA value, TA amount, or the like. Adjustment of TA may be understood as acquiring a new TA or updating TA. Acquiring a new TA may be achieved by acquiring an adjustment amount of the TA.

In some embodiments, the network device and the terminal device may also implement uplink timing maintenance for each TAG based on the method shown in FIG. 4. For each TAG, the network device may configure a time alignment timer, such as the second time alignment timer, to determine the time when the serving cells in the current TAG are in uplink synchronization.

In the embodiments of the present disclosure, the time consistency of TA adjustments between terminal devices and network devices can be ensured by using time alignment timers, it is conducive to ensuring the accuracy and precision of time in wireless communication, thereby improving the operation reliability of systems. For example, configuring a time alignment timer is conducive to optimization of signal transmission, improvement of communication quality, and minimization of multi-user interference, thereby improving network performance.

From the description hereinbefore, it can be seen that the initial value of TA and subsequent adjustments of TA may be notified to the terminal device by the network device. In order to improve the flexibility of TA adjustment, some communication systems (such as NR systems) introduce a mechanism of actively adjusting TA by the terminal device. For example, the terminal device may calculate TA values, and when the terminal device completes the calculation of TA values or needs to adjust TA, the terminal device may actively adjust TA. After adjustment of TA, the terminal device may retain the TA before active adjustment (the TA value before active adjustment is known to the network device). In some cases, the terminal device may use the TA value for transmission of uplink signals or channels.

However, after the introduction of this mechanism, there is still no relevant research on how to use the TA by terminal devices and how to maintain the first time alignment timer and the second time alignment timer.

In some embodiments, in response to the terminal device actively adjusting the TA, the terminal device may perform one or more of the following operations to address the above-mentioned problems: sending an uplink pilot sequence based on adjusted TA; sending an uplink channel based on the TA without adjustment; restarting the first time alignment timer; reconfiguring an initial value of the first time alignment timer; and sending indication information to the network device, where the indication information is configured to indicate information associated with adjustment of the TA.

For example, when the terminal device actively adjusts the TA, the terminal device may send uplink signals/channels based on the TA before adjustment, or on the adjusted TA. For example, the terminal device may send uplink signals/channels based on the same TA (such as the TA before adjustment or the adjusted TA), or on different TAs. As an example, the terminal device may send an uplink pilot sequence based on the adjusted TA, and send uplink channels, such as PUSCH and/or PUCCH, based on the TA before adjustment.

Due to the ease of estimating TA using uplink pilot signals and the high complexity of estimating TA using uplink channels, the terminal device sends uplink pilot sequences based on adjusted TA, in other words, the network device receives the uplink pilot sequences sent by the terminal device based on the TA actively adjusted by the terminal device, which is conducive to reducing the complexity of acquiring the adjusted TA by the network device. For example, the network device may perform uplink synchronization based on uplink pilot signals to acquire status information of the TA used by the terminal device, such as whether the terminal device has adjusted the TA, or the value of adjusted TA in the case that the terminal device has adjusted the TA.

When the terminal device sends the uplink channels based on the adjusted TA, it is difficult for the network device to acquire the information of TA before decoding. In this case, the network device may perform PUSCH or PUCCH detection based on the TA before adjustment. During detection, due to the fact that TA has been adjusted, the verification may not pass after complex decoding. Therefore, in some embodiments, the terminal device may send the uplink channels based on the TA before adjustment. That is to say, the terminal device retains the TA notified by the network device (i.e. the TA before adjustment), and may send uplink channels based on the TA before adjustment. For example, when the terminal device is not moving between cells, the network device may send an uplink channel based on the TA before adjustment.

In some embodiments, in response to the terminal device actively adjusting the TA, the terminal device restarts the first time alignment timer, which is conducive to ensuring that the time offset caused by hardware and other factors is within a controllable range.

In the scenario of carrier aggregation, when the terminal device actively adjusts the TA of one or more TAGs, the terminal device may restart the time alignment timers associated with the above-mentioned one or more TAGs. The above-mentioned one or more TAGs may be identified by TAG identification, and the time alignment timers associated with the above-mentioned one or more TAGs may be identified by TAG identification, or by the association identification between the TAG identification and the time alignment timers.

In some embodiments, the terminal device may adjust the timing duration of the first time alignment timer based on the detection results of the received signals, such as reconfiguring the initial value of the time alignment timer. For example, the terminal device may increase the timing duration of the first time alignment timer based on the detection results of the received signals. For example, the terminal device may reduce the timing duration of the first time alignment timer based on the detection results of the received signals. Compared with adjusting the timing duration of the first time alignment timer and notifying the terminal device using radio resource control (RRC) signaling by the network device, adjusting the timing duration of the first time alignment timer by the terminal device is conducive to reducing delay.

In some embodiments, the terminal device may send the initial value of the reconfigured first time alignment timer to the network device. The network device may adjust the initial value of the second time alignment timer based on this initial value. In addition, the terminal device may further receive confirmation information sent by the network device indicating that the network device has received the initial value of the first time alignment timer. In other words, the network device may send the above-mentioned confirmation information to the terminal device.

When the terminal device actively adjusts TA, the terminal device may determine whether to notify the network device. For example, the terminal device may notify the network device of information associated with the adjustment of the TA, thereby helping the network device to timely know the status of TA (such as whether being adjusted) and/or TA values. For example, the terminal device may also not notify the network device of the information associated with the adjustment of the TA, thereby saving uplink resources.

In some embodiments, the terminal device may notify the network device of the information associated with the adjustment of the TA by various means. For example, the terminal device may send indication information to the network device, or the network device may receive indication information sent by the terminal device. The indication information may be configured to indicate the information associated with the adjustment of the TA.

The information associated with the adjustment of the TA for example may include one or more of: occurrence of the adjustment of the TA, occurrence of reconfiguration (content of configuration, such as initial value, restarting) of the first time alignment timer, a value of the adjusted TA, and a difference for the adjustment of the TA. The value of the adjusted TA may be the updated value of TA determined by the terminal device, or the new value of TA. The difference for the adjustment of the TA may be the difference between the value of the adjusted TA and the value of original TA.

In addition, the information associated with the adjustment of the TA may further include parameter information of reconfiguration of the first time alignment timer, such as the initial value, whether being restarted, restarting time, and the like.

As mentioned above, when the terminal device actively adjusts TA, the terminal device may restart the first time alignment timer. The restarting time of the first time alignment timer may be associated with the sending time of the uplink signals/channels, such as the above-mentioned indication information. For example, when the time when the terminal device sends the above-mentioned indication information is moment t, then the time to restart the first time alignment timer may be moment t+N. As an example, N may be 6.

In some embodiments, an effective time of an adjusted value of the TA at the network device may be associated with the sending time or reception time of the above-mentioned indication information. For example, the effective time of the adjusted value of the TA is determined based on the reception time of the indication information and/or a first offset. The first offset may be valued of for example 6 subframes. That is to say, when the network device receives the indication information carrying the adjusted value of the TA sent by the terminal device at subframe n, the network device may bring the adjusted value of the TA into effect at subframe n+6. As an example, the first offset may be in the order of millisecond, that is, the first offset is valued of several milliseconds.

The above-mentioned indication information may be carried on for example a PUSCH or a PUCCH, or be implicitly indicated using a preamble sequence. The preamble sequence may be a dedicated preamble sequence. For example, the above-mentioned indication information may be signaling at the MAC layer.

In some embodiments, in response to no uplink transmit opportunity existing, the terminal device may cancel sending of the above-mentioned indication information to the network device.

In order to improve the accuracy and reliability of the TA actively adjusted by the terminal device, the TA actively adjusted by the terminal device may be checked. The following will illustrate the method for checking the TA actively adjusted by the terminal device.

In some embodiments, the terminal device may determine whether the adjusted TA is correct through interaction with the network device. For example, when the terminal device actively adjusts TA, the terminal device sends the first uplink sequence to the network device, in other words, the network device receives the first uplink sequence sent by the terminal device. The first uplink sequence is configured to determine whether the TA actively adjusted by the terminal device is correct. The first uplink sequence may be, for example, a pilot sequence.

In response to the TA actively adjusted by the terminal device being correct, the network device may restart the second time alignment timer. In response to the TA actively adjusted by the terminal device being not correct, the network device may send a TA adjustment command to the terminal device. As an example, the network device may perform TA estimation on the first uplink sequence to estimate the TA adopted by the terminal device, that is, to acquire the adjusted TA.

In some embodiments, when the terminal device actively adjusts the TA and restarts the time alignment timer, unlike in traditional systems, the terminal device may cancel sending of a preamble sequence to the network device.

In some embodiments, after the terminal device sends the first uplink sequence to the network device, the terminal device may determine whether the adjusted TA is correct based on feedback from the network device. For example, when the terminal device does not receive information or signaling sent by the network device, or when the network device does not send information or commands, such as TA adjustment commands or the above-mentioned indication information, to the terminal device, the adjusted TA is correct, in this way, resource overheads can be saved. For example, when the terminal device receives information or signaling, such as a TA adjustment command, sent by the network device, the adjusted TA is incorrect. In some embodiments, when the terminal device actively adjusts TA, the operation time of the first time alignment timer does not correspond to operation time of the second time alignment timer, i.e. the first time alignment timer and the second time alignment timer operate independently. For example, the terminal device may maintain the first time alignment timer according to the adjusted TA, and the network device may maintain the second time alignment timer in the way before the terminal device actively adjusts the TA. As an example, when the terminal device actively adjusts TA, the terminal device may restart the first time alignment timer, and the operation of the second time alignment timer is not adjusted, in other words, the original operation mode is maintained.

As mentioned above, when the terminal device actively adjusts TA, the terminal device may notify the network device. In some embodiments, terminal devices in different states may notify the network device in ways different from each other, such as notifying the network device to update TA.

In response to the terminal device being in an RRC_CONNECTED state, the terminal device may notify the network device using the above-mentioned indication information. In response to the terminal device being not in the RRC_CONNECTED state, the terminal device may perform one or more of: the terminal device entering the RRC_CONNECTED state, or the terminal device sending an uplink reference signal to the network device, where sending time of the uplink reference signal is associated with restarting time of the first time alignment timer, or the terminal device cancelling restart of the first time alignment timer.

Due to the fact that the terminal device being not in the RRC_CONNECTED state cannot send indication information to the network device, in some embodiments, the terminal device may enter the RRC_CONNECTED state. At this point, if the terminal device actively adjusts TA, the terminal device may send indication information to the network device to notify the network device of the information associated with the adjustment of the TA.

In some embodiments, the terminal device being not in the RRC_CONNECTED state may not enter the RRC_CONNECTED state, thereby saving energy consumption. In this case, the terminal device may send an uplink reference signal, such as SRS, to the network device. The restarting time of the first time alignment timer may be associated with the uplink reference signal. Alternatively, the terminal device may cancel restarting of the first time alignment timer.

The terminal device may experience detection failures during TA detection or measurement. When the TA detection by the terminal device fails, the terminal device may cancel active adjustment of the TA.

In some embodiments, in response to the terminal device actively adjusting the TA, the terminal device performs one or more of: clearing a hybrid automatic repeat request (HARQ) cache, notifying a RRC layer to release a PUCCH or a SRS, and clearing configured downlink assignment (DL assignment) and/or uplink grant (UL grant). The network device may also perform corresponding operations.

In response to the failure of TA detection and timeout of the first time alignment timer, it is considered that the terminal device loses uplink synchronization. In this case, the terminal device may also perform the above-mentioned operations.

When the first time alignment timer is in operation, it is considered that the terminal device is in uplink synchronization; and when the first time alignment timer is not in operation, such as timeout of the first time alignment timer, it is considered that the terminal device loses uplink synchronization. When the terminal device does not have the ability to actively adjust TA, the terminal device may send a preamble sequence to the network device to acquire a new TA when the first time alignment timer is not in operation. When the terminal device has the ability to actively adjust TA, the terminal device may actively adjust TA without sending a preamble sequence in the case where the first time alignment timer is not in operation.

In some embodiments, in response to the terminal device being in an uplink out-of-sync state, and uplink data of the terminal device arriving, in other words, there is uplink data to be transmitted, the operations performed by the terminal device may be determined based on the ability of the terminal device. For example, when the terminal device does not have the ability to actively adjust TA, the terminal device may perform a random access procedure, such as a two-step random access procedure or a four-step random access procedure, to re-achieve uplink synchronization. For example, when the terminal device has the ability to actively adjust TA, the terminal device may cancel triggering of the random access procedure. In this case, the terminal device may actively adjust the TA to achieve uplink synchronization.

In some embodiments, the first time alignment timer may be configured as infinity. In this case, the first time alignment timer does not involve timeout, that is to say, the terminal device cannot get to know whether the terminal device is in uplink synchronization state based on the first time alignment timer. In addition, in this case, the terminal device does not perform the operations relevant to uplink synchronization loss, such as clearing the HARQ cache, notifying the RRC layer to release a PUCCH or a SRS, and clearing configured downlink assignment and/or uplink grant.

In the case where the first time alignment timer is configured as infinity, when the terminal device does not have the ability to actively adjust TA, the terminal device is in the uplink out-of-sync state, and uplink data of the terminal device arrives, the terminal device triggers a scheduling request (SR). When the maximum number of SR retransmissions is reached, the terminal device may trigger a random access procedure. In this case, when the terminal device has the ability to actively adjust TA, the terminal device is in the uplink out-of-sync state, and the uplink data of the terminal device arrives, the terminal device may cancel triggering of SR.

In some embodiments, when the first time alignment timer is configured as infinity, the terminal device may perceive or determine whether the terminal device has lost uplink synchronization based on measurement results. The measurement results may be radio resource management (RRM) measurement results, such as the measurement results of reference signal received power (RSRP).

In order to improve the reliability of TA, whether to activate the function of TA active adjustment of the terminal device may be determined based on different scenarios, in other words, the application scenarios of the ability to actively adjust TA of the terminal device are determined. In the following, the correlation between the function of TA active adjustment of the terminal device and the scenarios will be illustrated.

Control of the TA includes open-loop control and closed-loop control. The open-loop control, for example, refers to that corresponding processing of the TA commands is performed only when the MAC entity does not select a random access (RA) preamble from the random access preambles of the contention based random access (CBRA) after the terminal device receives a TA command from RAR and MsgB of a special cell of a TAG, the terminal device sends a preamble of a contention free random access (CFRA) procedure, or the time alignment timer corresponding to the TAG is not in operation.

In some embodiments, the active adjustment of the TA by the terminal device may be associated with the open-loop control and/or the closed-loop control. For example, the active adjustment of the TA by the terminal device may be associated with the open-loop control and the closed-loop control. That is to say, the ability to actively adjust TA of the terminal device may be applied to scenarios of closed-loop control of TA, and to scenarios of open-loop control of TA. For example, the active adjustment of the TA by the terminal device may be associated with the closed-loop control or not associated with the open-loop control. That is to say, the ability to actively adjust TA of the terminal device may be applied to scenarios of closed-loop control of TA, and not to scenarios of open-loop control of TA., thereby improving the reliability of active adjustment of TA.

In some embodiments, the ability to actively adjust TA of the terminal device is associated with the TAGs. For example, TAGs may include a primary timing advance group (PTAG) and a secondary timing advance group (STAG). As an example, the ability to actively adjust TA of the terminal device may be not associated with PTAG and associated with STAG. For example, the ability to actively adjust TA of the terminal device may be associated with both PTAG and STAG.

In response to timeout of the first time alignment timer corresponding to the TAG, the terminal device loses uplink synchronization in the cell included in the TAG. In response to timeout of the first time alignment timer corresponding to PTAG, the terminal device loses uplink synchronization in all service cells. In response to timeout of the first time alignment timer corresponding to STAG, the terminal device loses uplink synchronization in all service cells included in STAG. Therefore, the ability to actively adjust TA of the terminal device may be associated with STAG, or the ability to actively adjust TA of the terminal device may be associated with STAG and not associated with PTAG, which is conducive to preventing the influence on communication quality due to the reliability of active adjustment of TA by the terminal device.

As mentioned above, in response to timeout of the second time alignment timer, the network device may send commands related to TA adjustment to the terminal device. In some embodiments, when the terminal device has the ability to actively adjust TA or the terminal device has activated the function of actively adjusting TA, or when the network device knows that the terminal device has activated the function of actively adjusting TA, in response to timeout of the second time alignment timer and the network device not receiving the preamble sequence sent by the terminal device, the network device restarts the second time alignment timer without sending the commands related to TA adjustment to the terminal device, such as commands of updating TA and/or restarting the first time alignment timer. This method may be executed, for example, when the terminal device actively adjusts TA and the operation time of the first time alignment timer does not correspond to the operation time of the second time alignment timer. In this way, it is conducive to preventing unnecessary TA adjustments by the terminal device, thereby saving resource.

Generally, in response to the terminal device being not in the RRC_CONNECTED state and timeout of the second time alignment timer, the network device pages the terminal device or sends a paging message to request the terminal device to enter connected state, in order to receive TA commands. In some embodiments, in response to the terminal device having the ability to actively adjust TA or the terminal device having activated the function of actively adjusting TA, and to timeout of the second time alignment timer, the network device may cancel sending of a paging message to the terminal device and/or the terminal device may cancel sending of a preamble sequence to the network device. For example, in response to the terminal device being not in the RRC_CONNECTED state and having the ability to actively adjust TA, the terminal device may send SRS, such as SRS related to positioning, to the network device. In this case, the network device may cancel sending of a paging message to the terminal device, and/or the terminal device may cancel sending of a preamble sequence to the network device.

When the terminal device has the ability to actively adjust TA, the terminal device may measure TA to obtain adjustment value of the TA. For example, the terminal device may measure and obtain instantaneous values of a plurality of uplink TAs, and process, such as averaging, the instantaneous values of the plurality of uplink TAs, to obtain new adjustment values for TAs.

In some embodiments, the terminal device may measure TA after the network device activates the previous adjustment value of TA. Taking the activation time of the previous adjustment value of TA being at subframe n+6 as an example, the terminal device may measure TA after the subframe n+6.

In some embodiments, the network device and terminal device may not measure the TA of the terminal device before the time when the network device activates the adjustment value of TA (excluding the time when the network device activates the adjustment value of TA).

In some embodiments, the terminal device may not send the above-mentioned indication information during the measurement of TA. After the measurement of TA, such as at a certain subframe after the measurement of TA, the terminal device may send the above-mentioned indication information to the network device to notify the network device to update the TA, or to notify the network device of the adjustment value of the TA, and the like.

In the above, the method embodiments of the present disclosure are illustrated in conjunction with FIGS. 1 to 4. In the following, the device embodiments of the present disclosure will be illustrated in conjunction with FIGS. 5 to 7. It should be understood that the illustration of the method embodiments corresponds to the illustration of the device embodiments, therefore, the parts not illustrated in detail may refer to the previous method embodiments.

FIG. 5 is a schematic diagram of the structure of the terminal device provided in some embodiments of the present disclosure. The terminal device 500 shown in FIG. 5 may include a first reception unit 510.

The first reception unit 510 is configured to receive a first parameter sent by a network device. The first parameter is configured to configure a first time alignment timer, and the terminal device has an ability of actively adjusting a TA.

In some embodiments, the terminal device further includes a first performing unit configured to in response to the terminal device actively adjusting the TA, perform one or more of: sending an uplink pilot sequence based on adjusted TA, sending an uplink channel based on the TA without adjustment, restarting the first time alignment timer, reconfiguring an initial value of the first time alignment timer, and sending indication information to the network device. The indication information is configured to indicate information associated with adjustment of the TA.

In some embodiments, the information associated with the adjustment of the TA includes one or more of: occurrence of the adjustment of the TA, occurrence of reconfiguration of the first time alignment timer, a value of the adjusted TA, and a difference for the adjustment of the TA.

In some embodiments, restarting time of the first time alignment timer is associated with sending time of the indicate information.

In some embodiments, the indicate information is sent before timeout of the first time alignment timer.

In some embodiments, the indicate information is carried by a PUSCH or a PUCCH, or the indicate information is implicitly indicated using a preamble sequence. The preamble sequence may be a dedicated preamble sequence.

In some embodiments, the indication information is a signaling at MAC layer.

In some embodiments, the terminal device further includes a first sending unit configured to in response to no uplink transmit opportunity existing, cancel sending of the indication information to the network device.

In some embodiments, the terminal device further includes a second sending unit configured to in response to the terminal device actively adjusting the TA, send a first uplink sequence to the network device. The first uplink sequence is configured to determine whether adjusted TA is correct.

In some embodiments, the terminal device further includes a second reception unit configured to in response to the adjusted TA being not correct, receive a TA adjustment command sent by the network device.

In some embodiments, operation time of the first time alignment timer does not correspond to operation time of a second time alignment timer. The second time alignment timer is a time alignment timer configured by the network device and associated with the first time alignment timer.

In some embodiments, in response to the terminal device being not in an RRC_CONNECTED state, the terminal device further including a second performing unit configured to perform one or more of: entering the RRC_CONNECTED state, or sending an uplink reference signal to the network device, where sending time of the uplink reference signal is associated with restarting time of the first time alignment timer, or cancelling restarting of the first time alignment timer.

In some embodiments, the terminal device further includes a third performing unit configured to in response to the terminal device actively adjusting the TA, perform one or more of: clearing a HARQ cache, notifying an RRC layer to release a PUCCH or an SRS, and clearing configured downlink assignment and/or uplink grant.

In some embodiments, the terminal device further includes an adjusting unit configured to in response to a TA detection by the terminal device failing, cancel active adjustment of the TA.

In some embodiments, the terminal device further includes a fourth performing unit configured to in response to the terminal device having the ability of actively adjusting the TA and the first time alignment timer being in a non-operational state, actively adjust the TA without sending a preamble sequence.

In some embodiments, the terminal device further includes a first triggering unit configured to in response to the terminal device having the ability of actively adjusting the TA, the terminal device being in an uplink out-of-sync state, and uplink data of the terminal device arriving, cancel triggering of a random access procedure.

In some embodiments, the terminal device has the ability of actively adjusting the TA, and the first time alignment timer is configured to be infinite, the terminal device further includes: a second triggering unit configured to in response to the terminal device being in an uplink out-of-sync state and uplink data of the terminal device arriving, cancel triggering of a SR.

In some embodiments, control of the TA includes open-loop control and closed-loop control, and active adjustment of the TA by the terminal device is associated with the open-loop control and/or the closed-loop control.

In some embodiments, the terminal device is configured with a PTAG and a STAG, and active adjustment of the TA by the terminal device is associated with the PTAG and/or the STAG.

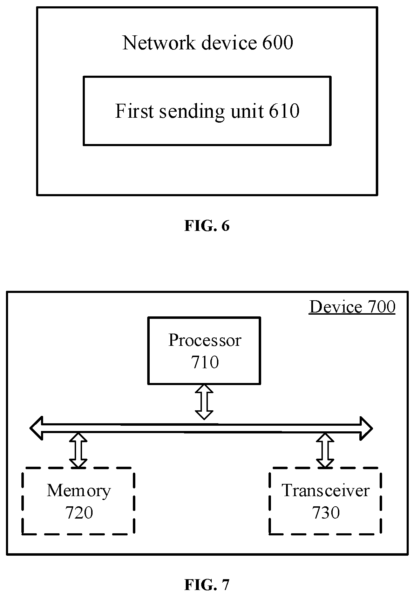

FIG. 6 is a schematic diagram of the structure of the network device provided in some embodiments of the present disclosure. The network device 600 shown in FIG. 6 may include a first sending unit 610.

The first sending unit 610 is configured to send a first parameter to a terminal device. The first parameter is configured to configure a first time alignment timer, and the terminal device has an ability of actively adjusting a TA.

In some embodiments, the network device further includes a first performing unit configured to in response to the terminal device actively adjusting the TA, perform one or more of: receiving an uplink pilot sequence sent by the terminal device based on adjusted TA, receiving an uplink channel sent by the terminal device based on the TA without adjustment, and receiving indication information sent by the terminal device. The indication information is configured to indicate information associated with adjustment of the TA.

In some embodiments, the information associated with the adjustment of the TA comprises one or more of: occurrence of the adjustment of the TA, occurrence of reconfiguration of the first time alignment timer, a value of the adjusted TA, and a difference for the adjustment of the TA.

In some embodiments, restarting time of the first time alignment timer is associated with sending time of the indicate information.

In some embodiments, the indicate information is sent before timeout of the first time alignment timer.

In some embodiments, the indicate information is carried by a PUSCH or a PUCCH, or the indicate information is implicitly indicated using a preamble sequence.

In some embodiments, the indication information is a signaling at MAC layer.

In some embodiments, the network device further includes a first reception unit configured to in response to the terminal device actively adjusting the TA, receive a first uplink sequence sent by the terminal device. The first uplink sequence is configured to determine whether adjusted TA is correct.

In some embodiments, the network device further includes a second performing unit configured to: in response to the adjusted TA being correct, restart a second time alignment timer, and/or in response to the adjusted TA being not correct, send a TA adjustment command to the terminal device. The second time alignment timer is a time alignment timer configured by the network device and associated with the first time alignment timer.

In some embodiments, operation time of the first time alignment timer does not correspond to operation time of a second time alignment timer, and the second time alignment timer is a time alignment timer configured by the network device and associated with the first time alignment timer.

In some embodiments, the network device further includes a second reception unit configured to in response to the terminal device being not in an RRC_CONNECTED state, receive an uplink reference signal sent by the terminal device. The sending time of the uplink reference signal is associated with restarting time of the first time alignment timer.

In some embodiments, an effective time of an adjusted value of the TA is determined based on reception time of the indication information and/or a first offset.

In some embodiments, control of the TA includes open-loop control and closed-loop control, and active adjustment of the TA by the terminal device is associated with the open-loop control and/or the closed-loop control.

In some embodiments, the terminal device is configured with a PTAG and a STAG, and active adjustment of the TA by the terminal device is associated with the PTAG and/or the STAG.

In some embodiments, the terminal device has the ability of actively adjusting the TA or activates a function of actively adjusting the TA, and the network device further includes a third performing unit configured to in response to timeout of a second time alignment timer and not receiving, by the network device, a preamble sequence sent by the terminal device, restart the second time alignment timer, and cancel sending of a command associated with TA adjustment to the terminal device. The second time alignment timer is a time alignment timer configured by the network device and associated with the first time alignment timer.

In some embodiments, the terminal device is not in an RRC_CONNECTED state, and the terminal device has the ability of actively adjusting the TA or activates a function of actively adjusting the TA. The network device further includes a second sending unit configured to in response to timeout of a second time alignment timer, cancel sending of a paging message to the terminal device. The second time alignment timer is a time alignment timer configured by the network device and associated with the first time alignment timer.

In optional embodiments, the sending units and the reception units illustrated above may be implemented as transceivers 730. The terminal device 500 and the network device 600 may further include processors 710 and memories 720, as shown in FIG. 7.

FIG. 7 is a schematic diagram of the structure of the communication apparatus provided in some embodiments of the present disclosure. The dashed lines in FIG. 7 indicate that the units or modules are optional. The device 700 may be used to implement the method illustrated in the above method embodiments. The device 700 may be a chip, a terminal device, or a network device.

The device 700 may include one or more processors 710. The one or more processors 710 can support the device 700 to implement the method illustrated in the above method embodiments. Each of the one or more processors 710 may be a general-purpose processor or a special-purpose processor. For example, each of the one or more processors may be a central processing unit (CPU). Alternatively, each of the one or more processors may also be other general-purpose processor, a digital signal processor (DSP), an application specific integrated circuit (ASIC), a field programmable gate array (FPGA), or other programmable logic device, a discrete gate or a transistor logic device, a discrete hardware component, or the like. A general-purpose processor may be a microprocessor or any conventional processor.

The device 700 may further include one or more memories 720. Each of the one or more memories 720 stores a program that can be executed by the one or more processors 710 so that the one or more processors 710 perform operations of the method illustrated in the above method embodiments. The one or more memories 720 may be independent of or integrated into the one or more processors 710.

The device 700 may further include a transceiver 730. The one or more processors 710 may communicate with other devices or chips through the transceiver 730. For example, the one or more processors 710 may transmit data to and receive data from other devices or chips through the transceiver 730.

The embodiments of the present disclosure further provide a computer-readable storage medium configured to store programs. The computer-readable storage medium is applicable to the terminal devices or the network devices provided in the embodiments of the present disclosure, and the program causes a computer to perform operations of the method executed by the terminal devices or network devices in the various embodiments of the present disclosure.

The embodiments of the present disclosure further provide a computer program product including programs. The computer program product is applicable to the terminal devices or the network devices provided in the embodiments of the present disclosure, and the programs cause a computer to perform operations of the method executed by the terminal devices or network devices in the various embodiments of the present disclosure.

The embodiments of the present disclosure further provide a computer program. The computer program is applicable to the terminal devices or the network devices provided in the embodiments of the present disclosure, and the computer program causes a computer to perform operations of the method executed by the terminal devices or network devices in the various embodiments of the present disclosure.

It should be understood that the terms "system" and "network" in the present disclosure may be used interchangeably. In addition, the terms used in the present disclosure are only used to explain the embodiments of the present disclosure, and are not intended to limit the present disclosure. The terms "first", "second", "third", "fourth", and the like in the description, claims, and drawings of the present disclosure are used to distinguish different objects, rather than to describe a specific order. In addition, the terms "comprise" and "have" and any variations thereof are intended to cover a non-exclusive inclusion.

In the embodiments of the present disclosure, "indicate" mentioned herein may refer to a direct indication, or may refer to an indirect indication, or may represent that there is an association relationship. For example, A indicates B, which may represent that A directly indicates B, for example, B may be derived from A; or may represent that A indirectly indicates B, for example, A indicates C, and B may be derived from C; or may represent that there is an association relationship between A and B.

In the embodiments of the present disclosure, "B corresponding to A" represents that B is associated with A, and B may be determined based on A. However, it should also be understood that, determining B based on A does not only represent determining B based only on A, but instead B may be determined based on A and/or other information.

In the embodiments of the present disclosure, the term "corresponding" may represent that there is a direct or indirect correspondence between the two, or may represent that there is an association relationship between the two, or may represent that there is a relationship such as indicating and being indicated, or configuring and being configured.

In the embodiments of the present disclosure, the reference to "including" may refer to direct inclusion or indirect inclusion. Alternatively, the "including" mentioned in the embodiments of the present disclosure may be replaced by "indicating" or "for determining". For example, A includes B, which may be replaced by A indicates B, or A is used to determine B.

In the embodiments of the present disclosure, "predefined" or "pre-configured" may be implemented by pre-storing corresponding codes, tables, or other forms that may be used to indicate related information in devices (for example, including the terminal device and the network device), and specific implementations thereof are not limited in the present disclosure. For example, pre-defined may refer to defined in protocols.

In the embodiments of the present disclosure, the "protocol" may refer to a standard protocol in the communications field, and may include, for example, an LTE protocol, an NR protocol, and a related protocol applied to a future communications system, which is not limited in the present disclosure.

In the embodiments of the present disclosure, the term "and/or" is merely used to describe an association relationship between associated objects, indicating that there may be three relationships. For example, A and/or B may indicate that: only A exists, both A and B exist, and only B exists. In addition, the character "/" herein generally indicates an "or" relationship between the associated objects.

In the embodiments of the present disclosure, sequence numbers of the foregoing processes do not represent execution sequences. The execution sequences of the processes should be determined according to functions and internal logics of the processes, and should not be construed as any limitation on the implementation processes of the embodiments of the present disclosure.

In the embodiments provided in the present disclosure, it should be understood that, the disclosed system, apparatus, and method may be implemented in other manners. For example, the described device embodiments are merely exemplary. For example, the division of units is merely logical function division and there may be other division manners in practice. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to an actual need to achieve the objectives of the solutions of the embodiments.

In addition, function units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement embodiments, the foregoing embodiments may be implemented completely or partially in a form of computer program products. A computer program product includes one or more computer instructions. When the computer program instructions are loaded and executed on a computer, the procedures or functions according to the embodiments of the present disclosure are completely or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center formed by integrating one or more usable medium. The usable medium may be a magnetic medium (for example, a floppy disk, a hard disk, or a magnetic tape), an optical medium (for example, a digital video disc (DVD)), a semiconductor medium (for example, a solid-state drive (SSD)), or the like.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for wireless communication, comprising:
receiving, by a terminal device, a first parameter sent by a network device, wherein the first parameter is configured to configure a first time alignment timer, and the terminal device has an ability of actively adjusting a timing advance (TA).

2. The method according to claim 1, further comprising:
in response to the terminal device actively adjusting the TA, performing, by the terminal device, one or more of:
sending an uplink pilot sequence based on adjusted TA;
sending an uplink channel based on the TA without adjustment;
restarting the first time alignment timer;
reconfiguring an initial value of the first time alignment timer; and
sending indication information to the network device, wherein the indication information is configured to indicate information associated with adjustment of the TA.

3. The method according to claim 2, wherein the information associated with the adjustment of the TA comprises one or more of:
occurrence of the adjustment of the TA;
occurrence of reconfiguration of the first time alignment timer;
a value of the adjusted TA; and
a difference for the adjustment of the TA.

4. The method according to claim 2 or claim 3, wherein restarting time of the first time alignment timer is associated with sending time of the indicate information.

5. The method according to any one of claims 2 to 4, wherein the indicate information is sent before timeout of the first time alignment timer.

6. The method according to any one of claims 2 to 5, wherein the indicate information is carried on a physical uplink shared channel (PUSCH) or a physical uplink control channel (PUCCH), or the indicate information is implicitly indicated using a preamble sequence.

7. The method according to any one of claims 2 to 5, wherein the indication information is a signaling at media access control (MAC) layer.

8. The method according to any one of claims 2 to 7, further comprising:
in response to no uplink transmit opportunity existing, cancelling, by the terminal device, sending of the indication information to the network device.

9. The method according to any one of claims 1 to 8, further comprising:
in response to the terminal device actively adjusting the TA, sending, by the terminal device, a first uplink sequence to the network device, wherein the first uplink sequence is configured to determine whether adjusted TA is correct.

10. The method according to claim 9, further comprising:
in response to the adjusted TA being not correct, receiving, by the terminal device, a TA adjustment command sent by the network device.

11. The method according to claim 1, wherein operation time of the first time alignment timer does not correspond to operation time of a second time alignment timer; and
wherein the second time alignment timer is a time alignment timer configured by the network device and associated with the first time alignment timer.

12. The method according to any one of claims 1 to 11, in response to the terminal device being not in an RRC_CONNECTED state, further comprising:
the terminal device enters the RRC_CONNECTED state; or
sending, by the terminal device, an uplink reference signal to the network device, wherein sending time of the uplink reference signal is associated with restarting time of the first time alignment timer; or
the terminal device cancels restarting of the first time alignment timer.

13. The method according to any one of claims 1 to 12, further comprising:
in response to the terminal device actively adjusting the TA, performing, by the terminal device, one or more of:
clearing a hybrid automatic repeat request (HARQ) cache;
notifying a radio resource control (RRC) layer to release a PUCCH or a sounding reference signal (SRS); and
clearing configured downlink assignment and/or uplink grant.

14. The method according to claim 1, further comprising:
in response to a TA detection by the terminal device failing, the terminal device does not actively adjust the TA.

15. The method according to claim 1, further comprising:
in response to the terminal device having the ability of actively adjusting the TA and the first time alignment timer being in a non-operational state, actively adjusting, by the terminal device, the TA without sending a preamble sequence.

16. The method according to claim 1, further comprising:
in response to the terminal device having the ability of actively adjusting the TA, the terminal device being in an uplink out-of-sync state, and uplink data of the terminal device arriving, cancelling, by the terminal device, triggering of a random access procedure.

17. The method according to claim 1, wherein the terminal device has the ability of actively adjusting the TA, and the first time alignment timer is configured as infinity, the method further comprises:
in response to the terminal device being in an uplink out-of-sync state and uplink data of the terminal device arriving, cancelling, by the terminal device, triggering of a scheduling request (SR).

18. The method according to claim 1, wherein control of the TA includes open-loop control and closed-loop control, and active adjustment of the TA by the terminal device is associated with the open-loop control and/or the closed-loop control.

19. The method according to claim 1, wherein the terminal device is configured with a primary timing advance group (PTAG) and a secondary timing advance group (STAG), and active adjustment of the TA by the terminal device is associated with the PTAG and/or the STAG.

20. A method for wireless communication, comprising:
sending, by a network device, a first parameter to a terminal device, wherein the first parameter is configured to configure a first time alignment timer, and the terminal device has an ability of actively adjusting a TA.

21. The method according to claim 20, further comprising:
in response to the terminal device actively adjusting the TA, performing, by the network device, one or more of:
receiving an uplink pilot sequence sent by the terminal device based on adjusted TA;
receiving an uplink channel sent by the terminal device based on the TA without adjustment; and
receiving indication information sent by the terminal device, wherein the indication information is configured to indicate information associated with adjustment of the TA.

22. The method according to claim 21, wherein the information associated with the adjustment of the TA comprises one or more of:
occurrence of the adjustment of the TA;
occurrence of reconfiguration of the first time alignment timer;
a value of the adjusted TA; and
a difference for the adjustment of the TA.

23. The method according to claim 21 or claim 22, wherein restarting time of the first time alignment timer is associated with sending time of the indicate information.

24. The method according to any one of claims 21 to 23, wherein the indicate information is sent before timeout of the first time alignment timer.

25. The method according to any one of claims 21 to 24, wherein the indicate information is carried by a PUSCH or a PUCCH, or the indicate information is implicitly indicated using a preamble sequence.

26. The method according to any one of claims 21 to 24, wherein the indication information is a signaling at MAC layer.

27. The method according to any one of claims 20 to 26, further comprising:
in response to the terminal device actively adjusting the TA, receiving, by the network device, a first uplink sequence sent by the terminal device, wherein the first uplink sequence is configured to determine whether adjusted TA is correct.

28. The method according to claim 27, further comprising:
in response to the adjusted TA being correct, restarting, by the network device, a second time alignment timer; and/or
in response to the adjusted TA being not correct, sending, by the network device, a TA adjustment command to the terminal device;
wherein the second time alignment timer is a time alignment timer configured by the network device and associated with the first time alignment timer.

29. The method according to claim 20, wherein operation time of the first time alignment timer does not correspond to operation time of a second time alignment timer; and
wherein the second time alignment timer is a time alignment timer configured by the network device and associated with the first time alignment timer.

30. The method according to claim 20, further comprising:
in response to the terminal device being not in an RRC_CONNECTED state, receiving, by the network device, an uplink reference signal sent by the terminal device, wherein sending time of the uplink reference signal is associated with restarting time of the first time alignment timer.

31. The method according to claim 21, wherein an effective time of an adjusted value of the TA is determined based on reception time of the indication information and/or a first offset.

32. The method according to claim 20, wherein control of the TA includes open-loop control and closed-loop control, and active adjustment of the TA by the terminal device is associated with the open-loop control and/or the closed-loop control.

33. The method according to claim 20, wherein the terminal device is configured with a PTAG and a STAG, and active adjustment of the TA by the terminal device is associated with the PTAG and/or the STAG.

34. The method according to claim 20, wherein the terminal device has the ability of actively adjusting the TA or activates a function of actively adjusting the TA; and
wherein the method further comprises:
in response to timeout of a second time alignment timer and not receiving, by the network device, a preamble sequence sent by the terminal device, restarting, by the network device, the second time alignment timer, and cancelling, by the network device, sending of a command associated with TA adjustment to the terminal device;
wherein the second time alignment timer is a time alignment timer configured by the network device and associated with the first time alignment timer.

35. The method according to claim 20, wherein the terminal device is not in an RRC_CONNECTED state, and the terminal device has the ability of actively adjusting the TA or activates a function of actively adjusting the TA;
the method further comprises:
in response to timeout of a second time alignment timer, cancelling, by the network device, sending of a paging message to the terminal device;
wherein the second time alignment timer is a time alignment timer configured by the network device and associated with the first time alignment timer.

36. A terminal device, comprising:
a first reception unit configured to receive a first parameter sent by a network device, wherein the first parameter is configured to configure a first time alignment timer, and the terminal device has an ability of actively adjusting a TA.

37. The terminal device according to claim 36, further comprising:
a first performing unit configured to in response to the terminal device actively adjusting the TA, perform one or more of:
sending an uplink pilot sequence based on adjusted TA;
sending an uplink channel based on the TA without adjustment;
restarting the first time alignment timer;
reconfiguring an initial value of the first time alignment timer; and
sending indication information to the network device, wherein the indication information is configured to indicate information associated with adjustment of the TA.

38. The terminal device according to claim 37, wherein the information associated with the adjustment of the TA comprises one or more of:
occurrence of the adjustment of the TA;
occurrence of reconfiguration of the first time alignment timer;
a value of the adjusted TA; and
a difference for the adjustment of the TA.

39. The terminal device according to claim 37 or claim 38, wherein restarting time of the first time alignment timer is associated with sending time of the indicate information.

40. The terminal device according to any one of claims 37 to 39, wherein the indicate information is sent before timeout of the first time alignment timer.

41. The terminal device according to any one of claims 37 to 40, wherein the indicate information is carried by a PUSCH or a PUCCH, or the indicate information is implicitly indicated using a preamble sequence.

42. The terminal device according to any one of claims 37 to 40, wherein the indication information is a signaling at MAC layer.

43. The terminal device according to any one of claims 37 to 42, further comprising:
a first sending unit configured to in response to no uplink transmit opportunity existing, cancel sending of the indication information to the network device.

44. The terminal device according to any one of claims 36 to 43, further comprising:
a second sending unit configured to in response to the terminal device actively adjusting the TA, send a first uplink sequence to the network device, wherein the first uplink sequence is configured to determine whether adjusted TA is correct.

45. The terminal device according to claim 44, further comprising:
a second reception unit configured to in response to the adjusted TA being not correct, receive a TA adjustment command sent by the network device.

46. The terminal device according to claim 36, wherein operation time of the first time alignment timer does not correspond to operation time of a second time alignment timer; and
wherein the second time alignment timer is a time alignment timer configured by the network device and associated with the first time alignment timer.

47. The terminal device according to any one of claims 36 to 46, in response to the terminal device being not in an RRC_CONNECTED state, further comprising:
a second performing unit configured to perform one or more of:
entering the RRC_CONNECTED state; or
sending an uplink reference signal to the network device, wherein sending time of the uplink reference signal is associated with restarting time of the first time alignment timer; or
cancelling restarting of the first time alignment timer.

48. The terminal device according to any one of claims 36 to 47, further comprising:
a third performing unit configured to in response to the terminal device actively adjusting the TA, perform one or more of:
clearing a HARQ cache;
notifying an RRC layer to release a PUCCH or an SRS; and
clearing configured downlink assignment and/or uplink grant.

49. The terminal device according to claim 36, further comprising:
an adjusting unit configured to in response to a TA detection by the terminal device failing, cancel active adjustment of the TA.

50. The terminal device according to claim 36, further comprising:
a fourth performing unit configured to in response to the terminal device having the ability of actively adjusting the TA and the first time alignment timer being in a non-operational state, actively adjust the TA without sending a preamble sequence.

51. The terminal device according to claim 36, further comprising:
a first triggering unit configured to in response to the terminal device having the ability of actively adjusting the TA, the terminal device being in an uplink out-of-sync state, and uplink data of the terminal device arriving, cancel triggering of a random access procedure.

52. The terminal device according to claim 36, wherein the terminal device has the ability of actively adjusting the TA, and the first time alignment timer is configured as infinity, the terminal device further comprises:
a second triggering unit configured to in response to the terminal device being in an uplink out-of-sync state and uplink data of the terminal device arriving, cancel triggering of a SR.

53. The terminal device according to claim 36, wherein control of the TA includes open-loop control and closed-loop control, and active adjustment of the TA by the terminal device is associated with the open-loop control and/or the closed-loop control.

54. The terminal device according to claim 36, wherein the terminal device is configured with a PTAG and a STAG, and active adjustment of the TA by the terminal device is associated with the PTAG and/or the STAG.

55. A network device, comprising:
a first sending unit configured to send a first parameter to a terminal device, wherein the first parameter is configured to configure a first time alignment timer, and the terminal device has an ability of actively adjusting a TA.

56. The network device according to claim 55, further comprising:
a first performing unit configured to in response to the terminal device actively adjusting the TA, perform one or more of:
receiving an uplink pilot sequence sent by the terminal device based on adjusted TA;
receiving an uplink channel sent by the terminal device based on the TA without adjustment; and
receiving indication information sent by the terminal device, wherein the indication information is configured to indicate information associated with adjustment of the TA.

57. The network device according to claim 56, wherein the information associated with the adjustment of the TA comprises one or more of:
occurrence of the adjustment of the TA;
occurrence of reconfiguration of the first time alignment timer;
a value of the adjusted TA; and
a difference for the adjustment of the TA.

58. The network device according to claim 56 or claim 57, wherein restarting time of the first time alignment timer is associated with sending time of the indicate information.

59. The network device according to any one of claims 56 to 58, wherein the indicate information is sent before timeout of the first time alignment timer.

60. The network device according to any one of claims 56 to 59, wherein the indicate information is carried by a PUSCH or a PUCCH, or the indicate information is implicitly indicated using a preamble sequence.

61. The network device according to any one of claims 56 to 59, wherein the indication information is a signaling at MAC layer.

62. The network device according to any one of claims 55 to 61, further comprising:
a first reception unit configured to in response to the terminal device actively adjusting the TA, receive a first uplink sequence sent by the terminal device, wherein the first uplink sequence is configured to determine whether adjusted TA is correct.

63. The network device according to claim 62, further comprising a second performing unit configured to:
in response to the adjusted TA being correct, restart a second time alignment timer; and/or
in response to the adjusted TA being not correct, send a TA adjustment command to the terminal device;
wherein the second time alignment timer is a time alignment timer configured by the network device and associated with the first time alignment timer.

64. The network device according to claim 55, wherein operation time of the first time alignment timer does not correspond to operation time of a second time alignment timer; and
wherein the second time alignment timer is a time alignment timer configured by the network device and associated with the first time alignment timer.

65. The network device according to claim 55, further comprising:
a second reception unit configured to in response to the terminal device being not in an RRC_CONNECTED state, receive an uplink reference signal sent by the terminal device, wherein sending time of the uplink reference signal is associated with restarting time of the first time alignment timer.

66. The network device according to claim 56, wherein an effective time of an adjusted value of the TA is determined based on reception time of the indication information and/or a first offset.

67. The network device according to claim 55, wherein control of the TA includes open-loop control and closed-loop control, and active adjustment of the TA by the terminal device is associated with the open-loop control and/or the closed-loop control.

68. The network device according to claim 55, wherein the terminal device is configured with a PTAG and a STAG, and active adjustment of the TA by the terminal device is associated with the PTAG and/or the STAG.

69. The network device according to claim 55, wherein the terminal device has the ability of actively adjusting the TA or activates a function of actively adjusting the TA; and
wherein the network device further comprises:
a third performing unit configured to in response to timeout of a second time alignment timer and not receiving, by the network device, a preamble sequence sent by the terminal device, restart the second time alignment timer, and cancel sending of a command associated with TA adjustment to the terminal device;
wherein the second time alignment timer is a time alignment timer configured by the network device and associated with the first time alignment timer.

70. The network device according to claim 55, wherein the terminal device is not in an RRC_CONNECTED state, and the terminal device has the ability of actively adjusting the TA or activates a function of actively adjusting the TA;
the network device further comprises:
a second sending unit configured to in response to timeout of a second time alignment timer, cancel sending of a paging message to the terminal device;
wherein the second time alignment timer is a time alignment timer configured by the network device and associated with the first time alignment timer.

71. A terminal device, comprising a memory and a processor, wherein the memory is configured to store a program, and the processor is configured to call the program in the memory, causing the terminal device to perform operations of the method according to any one of claims 1 to 19.

72. A network device, comprising a memory and a processor, wherein the memory is configured to store a program, and the processor is configured to call the program in the memory, causing the network device to perform operations of the method according to any one of claims 20 to 35.

73. A device, comprising a processor, wherein the processor is configured to call programs from a memory, causing the device to perform operations of the method according to any one of claims 1 to 19.

74. A device, comprising a processor, wherein the processor is configured to call programs from a memory, causing the device to perform operations of the method according to any one of claims 20 to 35.

75. A chip, comprising a processor, wherein the processor is configured to call programs from a memory, causing a device having the chip to perform operations of the method according to any one of claims 1 to 19.

76. A chip, comprising a processor, wherein the processor is configured to call programs from a memory, causing a device having the chip to perform operations of the method according to any one of claims 20 to 35.

77. A computer-readable storage medium, configured to store programs, which cause a computer to perform operations of the method according to any one of claims 1 to 19.

78. A computer-readable storage medium, configured to store programs, which cause a computer to perform operations of the method according to any one of claims 20 to 35.

79. A computer program product, comprising programs that cause a computer to perform operations of the method according to any one of claims 1 to 19.

80. A computer program product, comprising programs that cause a computer to perform operations of the method according to any one of claims 20 to 35.

81. A computer program, configured to causes a computer to perform operations of the method according to any one of claims 1 to 19.

82. A computer program, configured to causes a computer to perform operations of the method according to any one of claims 20 to 35.
